# FASCICULE DE BREVET EUROPEEN

(11) **EP 2 904 687 B1**
(45) Date de publication et mention de la délivrance du brevet: **21.09.2016**
(21) Numéro de dépôt: 13782801.8
(22) Date de dépôt: 04.10.2013
(51) Int. Cl.: H02J 7/00

(54) **CIRCUIT DE GESTION DE LA CHARGE D'UNE BATTERIE**
SCHALTUNG ZUR VERWALTUNG DES LADEZUSTANDES EINER BATTERIE
CIRCUIT FOR MANAGING THE CHARGE OF A BATTERY

(30) Priorité: 04.10.2012 FR 1259432
(43) Date de publication de la demande: 12.08.2015
(73) Titulaire: Commissariat à l'Energie Atomique et aux Energies Alternatives, 75015 Paris (FR)
(72) Inventeur: DAUCHY, Julien, F-73000 Chambery (FR); CHATROUX, Daniel, F-38470 Teche (FR)
(74) Mandataire: Thibon, Laurent
(86) Numéro de dépôt international: PCT/FR2013/052366
(87) Numéro de publication internationale: WO 2014/053789

(56) Documents cités:
- DE-A1-102007 004 569
- DE-A1-102011 084 473
- US-A- 4 303 877
- US-A1- 2003 132 732

## Description

### Domaine de l'invention

La présente invention concerne de façon générale les batteries électriques, et vise plus particulièrement la gestion de la charge dans une batterie. Elle concerne notamment un circuit de gestion de charge adapté à mettre en oeuvre des fonctions d'équilibrage et d'arrêt de charge dans une batterie de plusieurs cellules élémentaires.

### Exposé de l'art antérieur

Une batterie électrique est un groupement de plusieurs cellules élémentaires (accumulateurs, etc.) reliées en série et/ou en parallèle entre deux noeuds ou bornes, respectivement positive et négative, de fourniture d'une tension continue. Lors de phases de décharge de la batterie, un courant circule de la borne positive vers la borne négative de la batterie, à travers une charge à alimenter. Lors de phases de charge de la batterie, un chargeur applique un courant de charge circulant de la borne négative vers la borne positive de la batterie. Ce courant passe par les différentes cellules de la batterie, ce qui provoque leur charge. Une batterie est généralement associée à un circuit de gestion de charge configuré pour, lors des phases de recharge, détecter la fin de la charge et interrompre la charge suffisamment tôt pour éviter une surcharge qui pourrait entraîner des dégradations. Le circuit de gestion de charge peut en outre être adapté à équilibrer les niveaux de charge des cellules de la batterie pendant les phases de recharge. Dans certaines batteries, le circuit de gestion de charge est relativement complexe, et contribue de façon significative à augmenter le coût, le poids et/ou l'encombrement de la batterie.

Le document US20030132732 divulgue un contrôleur de charge de batterie comportant une protection à la surcharge réalisé par un élément chauffant (une Zener) couplé thermiquement à un interrupteur contrôlant le courant de charge.

### Résumé

Ainsi, un objet d'un mode de réalisation de la présente invention est de prévoir un circuit de gestion de la charge d'une batterie de cellules élémentaires, ce circuit comportant : une pluralité d'éléments chauffants, chaque élément chauffant étant adapté à écrêter la tension à ses bornes en dissipant de la chaleur au-delà d'une tension d'activation, et les différents éléments chauffants étant destinés à être connectés aux bornes de sous-ensembles distincts d'une ou plusieurs cellules de la batterie ; au moins un capteur de température adapté à détecter une activation d'un ou plusieurs desdits éléments chauffants ; et un circuit de contrôle adapté à commander le courant de charge de la batterie en fonction de détections d'activations d'éléments chauffants par le capteur de température.

Selon un mode de réalisation, la tension d'activation de chaque élément chauffant est choisie en fonction de la tension nominale de pleine charge du sous-ensemble de cellules auquel il est destiné à être connecté.

Selon un mode de réalisation, la tension d'activation de chaque élément chauffant est supérieure ou égale à la tension nominale de pleine charge du sous-ensemble de cellules auquel il est destiné à être connecté.

Selon un mode de réalisation, la tension d'activation de chaque élément chauffant est inférieure à la tension nominale de pleine charge du sous-ensemble de cellules auquel il est destiné à être connecté.

Selon un mode de réalisation, chaque élément chauffant comprend une diode Zener.

Selon un mode de réalisation, chaque élément chauffant comprend un circuit intégré d'écrêtage à tension d'activation programmable.

Selon un mode de réalisation, chaque sous-ensemble comprend une seule cellule.

Selon un mode de réalisation, chaque sous-ensemble comprend au moins deux cellules.

Selon un mode de réalisation, le circuit de gestion de charge comprend plusieurs capteurs de température, les différents capteurs de température étant couplés thermiquement avec des éléments chauffants distincts.

Selon un mode de réalisation, le circuit de contrôle est configuré pour modifier le courant de charge lorsque l'activation d'un élément chauffant est détectée.

Selon un mode de réalisation, la modification du courant de charge consiste à diminuer le courant de charge sans l'interrompre totalement.

Selon un mode de réalisation, la modification du courant de charge consiste à interrompre le courant de charge.

Selon un mode de réalisation, le circuit de contrôle est configuré pour interrompre le courant de charge lorsque chacun des capteurs de température détecte une activation d'élément chauffant.

Un autre mode de réalisation prévoit un assemblage comportant une batterie de cellules élémentaires et un circuit de gestion de charge du type susmentionné.

### Brève description des dessins

Ces objets, caractéristiques et avantages, ainsi que d'autres seront exposés en détail dans la description suivante de modes de réalisation particuliers faite à titre non limitatif en relation avec les figures jointes parmi lesquelles :
la figure 1 est un schéma électrique d'un exemple d'un assemblage comportant une batterie et un exemple d'un circuit de gestion de charge de la batterie ;
la figure 2 est un schéma électrique d'un exemple d'un assemblage comportant une batterie et un autre exemple d'un circuit de gestion de charge de la batterie ;
la figure 3 est un schéma électrique d'un exemple d'un assemblage comportant une batterie et un exemple d'un mode de réalisation d'un circuit de gestion de charge de la batterie ;
la figure 4 est un schéma électrique d'un exemple d'un assemblage comportant une batterie et une variante de réalisation d'un circuit de gestion de charge de la batterie ;
la figure 5 est un schéma électrique partiel de l'assemblage de la figure 3, illustrant de façon plus détaillée un exemple de réalisation d'un élément du circuit de gestion de charge de la figure 3 ;
la figure 6 est un schéma électrique partiel de l'assemblage de la figure 4, illustrant de façon plus détaillée un exemple de réalisation d'un élément du circuit de gestion de charge de la figure 4 ;
la figure 7 est un chronogramme illustrant un exemple de fonctionnement d'un circuit de gestion de charge du type décrit en relation avec les figures 3 à 6 ; et
la figure 8 est un schéma électrique d'un assemblage comportant une batterie et une autre variante de réalisation d'un circuit de gestion de charge de la batterie.

Par souci de clarté, de mêmes éléments ont été désignés par de mêmes références aux différentes figures. De plus, seuls les éléments utiles à la compréhension des modes de réalisation décrits ont été détaillés.

### Description détaillée

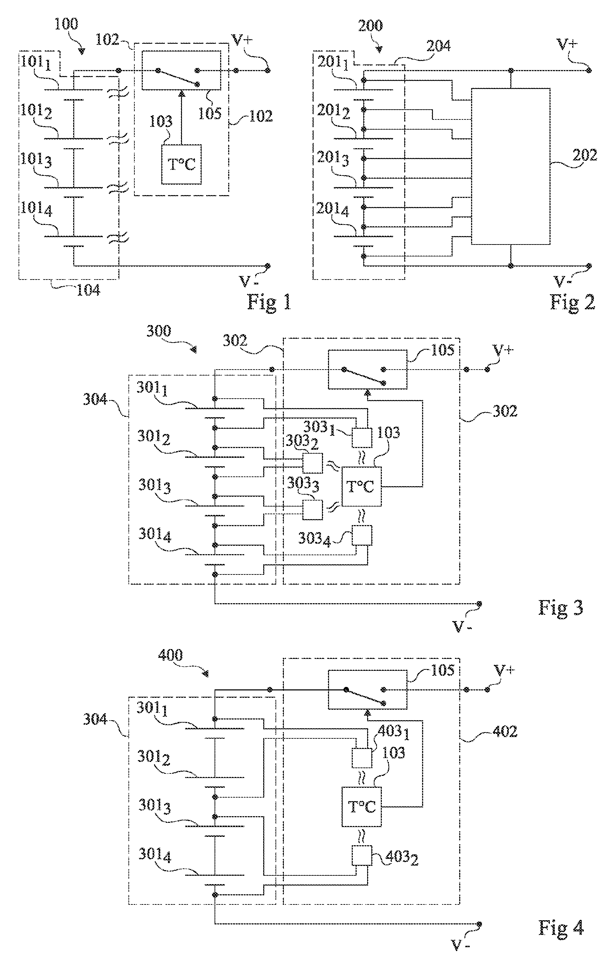

La figure 1 est un schéma électrique d'un exemple d'un assemblage 100 comprenant une batterie 104 de quatre cellules élémentaires 101ᵢ, i étant un entier allant de 1 à 4, connectées en série entre des bornes V₊ et V₋ de fourniture d'une tension continue. Dans cet exemple, les cellules 101ᵢ sont des cellules nickel-cadmium (NiCd) ou nickel-hydrure métallique (NiMH). Ces cellules ont pour propriété, lorsqu'un courant de charge les traverse après qu'elles aient atteint leur niveau nominal de pleine charge, c'est-à-dire après que la tension à leurs bornes ait atteint un certain seuil de tension, ou tension nominale de pleine charge, de se mettre à chauffer sous l'effet de réactions chimiques parasites. Une cellule chargée peut, au moins pendant un certain temps, continuer à être soumise à un courant de charge sans se détériorer. Dans ce cas, la tension aux bornes de cette cellule continue à augmenter au-delà de la tension nominale de pleine charge sans que cela n'entraîne de détérioration de la cellule. Lorsque le courant de charge est interrompu, la tension aux bornes de la cellule redescend alors et se stabilise à la tension nominale de pleine charge de la cellule. L'énergie électrique excédentaire est dissipée dans les réactions chimiques parasites. La tension aux bornes de telles cellules ne doit toutefois pas dépasser un certain seuil critique, ou tension maximale supportée par la cellule, sous peine de dégrader la cellule.

L'assemblage 100 comprend en outre un circuit de gestion de charge 102 couplé à la batterie 104, configuré pour détecter la fin de la charge et interrompre le courant de charge avant qu'une surcharge susceptible d'endommager la batterie ne se produise. Le circuit 102 comprend un capteur de température 103 placé à l'intérieur de l'assemblage, à proximité des cellules 101ᵢ, et un circuit de contrôle 105 configuré pour contrôler le courant de charge en fonction de la température mesurée par le capteur 103. Vers la fin d'une phase de charge, lorsque la ou les cellules les plus chargées dépassent leur niveau nominal de pleine charge, le capteur 103 détecte une élévation de température à l'intérieur de l'assemblage, liée aux réactions chimiques parasites dans cette cellule. A titre d'exemple, dans un premier temps, le courant de charge n'est pas interrompu, et les cellules moins chargées continuent à se charger. On considère par exemple que la batterie est suffisamment chargée lorsque l'élévation de température mesurée par le capteur 103 à l'intérieur de l'assemblage dépasse un seuil. Ce seuil correspond par exemple à l'activation des réactions chimiques parasites dans toutes les cellules de la batterie ou dans un nombre significatif de cellules de la batterie. Le circuit 105 interrompt alors le courant de charge. Ainsi, le circuit de gestion de charge 102 met en oeuvre non seulement une fonction d'arrêt de charge de la batterie, mais aussi une fonction d'équilibrage des cellules de la batterie.

Le circuit de gestion charge 102 de la figure 1 présente l'avantage d'être particulièrement simple à réaliser, léger et peu encombrant. En outre, des circuits de gestion de ce type étant déjà prévus dans de nombreuses batteries nickel-cadmium ou nickel-hydrure métallique existantes, les coûts de développement de ce circuit sont amortis et son prix de revient est réduit.

Toutefois, le circuit 102 n'est compatible qu'avec des cellules dans lesquelles la fin de la charge se traduit par une augmentation significative de la température de la cellule. Ceci n'est pas le cas de toutes les cellules. En particulier ceci n'est pas le cas des cellules lithium-ion, dans lesquelles, en fin de charge, la tension aux bornes de la cellule continue de monter au-delà de la tension nominale de pleine charge de la cellule sans provoquer d'échauffement, jusqu'à un niveau critique au-delà duquel la cellule risque d'être endommagée. Il faut alors prévoir des circuits de gestion de charge spécifiques, plus complexes et plus coûteux que le circuit de la figure 1.

La figure 2 est un schéma électrique d'un autre exemple d'un assemblage 200 comprenant une batterie 204 de quatre cellules élémentaires 201ᵢ, i étant un entier allant de 1 à 4, connectées en série entre des bornes V₊ et V₋ de fourniture d'une tension continue. Dans cet exemple, les cellules 201ᵢ sont des cellules dans lesquelles la fin de la charge n'entraîne pas d'échauffement significatif de la cellule, par exemple des cellules lithium-ion. L'assemblage 200 comprend en outre un circuit de gestion de charge 202 configuré pour détecter la fin de la charge et interrompre la charge avant qu'un niveau de surcharge susceptible d'endommager la batterie ne soit atteint. Le circuit 202 a des entrées reliées à chacune des cellules de la batterie. Il est configuré pour surveiller la tension aux bornes de chaque cellule et interrompre la charge avant qu'une cellule n'atteigne son niveau de tension critique de surcharge. Le circuit 200 comprend par exemple des circuits de mesure différentielle, des comparateurs, etc. Le circuit 202 peut en outre être configuré pour mettre en oeuvre des fonctions d'équilibrage, via des branches de dérivation, s'il détecte des disparités de vitesse de charge des différentes cellules.

Des circuits de gestion de charge du type décrit en relation avec la figure 2 peuvent être réalisés quel que soit la technologie de cellule utilisée. Les circuits de ce type présentent toutefois l'inconvénient d'être plus complexes, plus encombrants, et plus coûteux que les circuits de gestion du type décrit en relation avec la figure 1.

La figure 3 est un schéma électrique d'un exemple d'un assemblage 300 comportant une batterie 304 et un exemple d'un mode de réalisation d'un circuit de gestion de charge 302. Dans cet exemple, la batterie 304 comprend quatre cellules élémentaires 301ᵢ, i étant un entier allant de 1 à 4, connectées en série entre des bornes V₊ et V₋ de fourniture d'une tension continue. Les cellules 301ᵢ peuvent être de tout type de technologie. A titre d'exemple, les cellules 301ᵢ sont des cellules dans lesquelles, en fin de charge, si un courant de charge est appliqué après que la cellule ait atteint son niveau nominal de pleine charge, la tension aux bornes de la cellule s'élève au-delà du niveau nominal de pleine charge sans qu'un échauffement significatif de la cellule ne se produise. Les cellules 301ᵢ sont par exemple des cellules lithium-ion.

Selon un aspect, le circuit de gestion de charge 302 comprend, associé à chacune des cellules 301ᵢ de la batterie, un élément chauffant 303ᵢ configuré pour produire de la chaleur lorsque la tension à ses bornes dépasse un seuil de tension, ou tension d'activation. La tension d'activation des éléments chauffants 303ᵢ est par exemple égale à la tension nominale de pleine charge des cellules de la batterie. A titre de variante, si les cellules peuvent supporter, sans dégradation, une certaine surcharge au-delà de leur tension nominale de pleine charge, le seuil d'activation peut être compris entre la tension nominale de pleine charge et la tension critique de surcharge des cellules, c'est-à-dire la tension maximale que peut supporter une cellule sans dégradation. A titre de variante, si les cellules ne peuvent supporter aucune surcharge au-delà de leur tension nominale de pleine charge, le seuil d'activation des éléments chauffants peut être inférieur à la tension nominale de pleine charge des cellules, par exemple compris entre 80 et 95 % de la tension nominale de pleine charge des cellules.

Le circuit 302 comprend en outre un capteur de température 103, placé à l'intérieur de l'assemblage, et un circuit de contrôle 105 adapté à contrôler le courant de charge de la batterie en fonction de la température mesurée par le capteur 103. Le capteur 103 est par exemple un capteur à thermistance à coefficient de température négatif. Tout autre type de capteur de température peut cependant être utilisé.

Vers la fin d'une phase de charge de la batterie, lorsque la ou les cellules 301ᵢ les plus chargées atteignent le niveau d'activation des éléments chauffants 303ᵢ qui leur sont associés, le ou les éléments chauffants 303ᵢ correspondants se mettent à produire de la chaleur, et le capteur 103 détecte une élévation de température à l'intérieur de l'assemblage. On notera que le circuit 302 peut comprendre des moyens additionnels, non représentés, permettant de différentier une élévation de température liée à l'activation d'un ou plusieurs éléments chauffants, d'une élévation de température liée à d'autres phénomènes, par exemple liée à une élévation de la température ambiante. Ces moyens additionnels comprennent par exemple un capteur de température ambiante distinct du capteur 103, et/ou des moyens d'analyse des pentes d'évolution de la température mesurée par le capteur 103.

A titre d'exemple, lorsque le capteur 103 détecte une élévation de température liée à l'activation d'un ou plusieurs éléments chauffants, le courant de charge peut, dans un premier temps, être maintenu. Les cellules les moins chargées continuent alors à se charger jusqu'à atteindre le seuil d'activation des éléments chauffants qui leur sont associés. On peut par exemple considérer que la batterie est suffisamment chargée lorsque l'élévation de température mesurée par le capteur 103 à l'intérieur de l'assemblage dépasse un seuil. Ce seuil correspond par exemple à l'activation des éléments chauffants de toutes les cellules de la batterie, ou d'un nombre significatif de cellules. Le courant de charge peut alors être interrompu par le circuit de contrôle 105. Ainsi, le circuit de gestion de charge 302 met en oeuvre non seulement une fonction d'arrêt de charge de la batterie, mais aussi une fonction d'équilibrage des cellules de la batterie.

Le circuit de gestion de charge 302 présente l'avantage d'être particulièrement simple à réaliser. A titre d'exemple, pour réaliser le capteur de température 103 et le circuit de contrôle associé 105 du circuit 302, un circuit de gestion de charge du type décrit en relation avec la figure 1, existant déjà dans des batteries nickel-cadmium ou nickel-hydrure métallique, peut être utilisé sans modification. Il suffit alors de connecter un élément chauffant 303ᵢ en parallèle de chacune des cellules de la batterie pour obtenir l'assemblage 300 de la figure 3. En d'autres termes, la prévision d'éléments chauffants aux bornes des cellules permet de reproduire artificiellement le phénomène de génération de chaleur qui se produit naturellement en fin de charge dans certaines technologies de cellules (par exemple NiCd ou NiMH). Ceci permet de réutiliser des circuits de gestion de charge existants, dans des technologies dans lesquelles les cellules ne produisent pas naturellement (c'est-à-dire par réaction chimique) de la chaleur en fin de charge.

Le circuit de gestion de charge 302 convient particulièrement bien aux batteries utilisant des cellules lithium-ion à base de phosphate de fer (LiFePO₄). En effet, dans ce type de cellule, il existe une plage de tensions relativement importante entre la tension nominale de pleine charge de la cellule et la tension critique de la cellule, ou tension maximale que la cellule peut supporter sans détérioration. Ceci offre une certaine flexibilité dans le choix du seuil d'activation des éléments chauffants. On prévoit de préférence des éléments chauffants 303ᵢ dont le seuil d'activation est compris dans cette plage. A titre d'exemple, la société A123 SYSTEMS commercialise des cellules lithium-ion à base de phosphate de fer ayant une tension nominale de pleine charge de 3,6 V et pouvant supporter une surtension jusqu'à 4,2 V, voire 4,5 V (tension critique de la cellule), sans risque de détérioration. Ces cellules présentent en outre l'avantage, lorsqu'elles sont assemblées en batterie et traversées par des courants sensiblement identiques, de se charger de manière relativement équilibrée (c'est-à-dire sensiblement à la même vitesse). Les inventeurs ont constaté que les modes de réalisation décrits fonctionnent particulièrement bien avec ces cellules.

Dans un mode de réalisation préféré, comme cela est illustré schématiquement sur la figure 3, les éléments 303ᵢ sont situés à proximité du capteur de température 103, de façon à minimiser le temps mis par le capteur 103 à détecter l'échauffement des éléments 303ᵢ. Pour améliorer encore le couplage thermique entre les éléments 303ᵢ et le capteur 103, on peut utiliser une graisse de contact thermique, l'encapsulation des éléments 303ᵢ et du capteur 103 dans une résine thermiquement conductrice, ou toute autre solution de couplage thermique adaptée.

En fonction de l'utilisation envisagée, et notamment du type de cellule utilisé et de la capacité des cellules à supporter des surcharges, divers modes de commande du courant de charge par le circuit 105 peuvent être prévus. A titre d'exemple, dans un premier mode de commande, le circuit 105 peut être configuré pour interrompre le courant de charge dès que l'activation de l'un des éléments 303ᵢ est détectée. Dans un deuxième mode de commande, le circuit 105 peut être configuré pour réduire le courant de charge sans l'interrompre lorsque l'activation de l'un des éléments 303ᵢ est détectée, puis maintenir le courant de charge à un niveau réduit pendant un certain temps avant de l'interrompre totalement. Dans un troisième mode de commande, le circuit 105 peut être configuré pour réduire le courant de charge sans l'interrompre lorsque l'élévation de température détectée par le capteur 103 dépasse un premier seuil, maintenir un courant de charge réduit lorsque l'élévation de température détectée par le capteur 103 est comprise entre le premier seuil et un deuxième seuil supérieur au premier seuil, et interrompre le courant de charge lorsque l'élévation de température mesurée par le capteur 103 est supérieure au deuxième seuil. Ainsi, le circuit 302 présente l'avantage de permettre d'équilibrer au moins partiellement le niveau de charge des cellules, dans le cas où les cellules ne se chargeraient pas toutes à la même vitesse.

La figure 4 est un schéma électrique illustrant un exemple d'un assemblage 400 comportant la batterie 304 de la figure 3 et une variante de réalisation d'un circuit de gestion de charge 402. Le circuit de gestion de charge 402 comprend, comme dans l'exemple de la figure 3, un capteur de température 103 placé à l'intérieur de l'assemblage et un circuit de contrôle 105 relié au capteur 103 et adapté à contrôler le courant de charge de la batterie en fonction de la température mesurée par le capteur 103.

Le circuit de gestion de charge 402 de la figure 4 diffère du circuit 302 de la figure 3 en ce que dans le circuit de la figure 4, un même élément chauffant est associé à plusieurs cellules 301ᵢ, au lieu de un élément chauffant par cellule dans le circuit de la figure 3. Dans l'exemple représenté, le circuit 402 comprend deux éléments chauffants 403ⱼ, j étant un entier allant de 1 à 2. L'élément chauffant 403₁ est connecté en parallèle de l'association en série des cellules 301₁ et 301₂, et l'élément chauffant 403₂ est connecté en parallèle de l'association en série des cellules 301₃ et 301₄. Chaque élément chauffant 403ⱼ est configuré pour produire de la chaleur lorsque la tension à ses bornes dépasse un seuil d'activation ou tension d'activation, par exemple égal à deux fois la tension nominale de pleine charge d'une cellule. A titre de variante, si les cellules peuvent supporter, sans dégradation, une certaine surcharge au-delà de leur tension nominale de pleine charge, le seuil d'activation peut être compris entre deux fois la tension nominale de pleine charge et deux fois la tension critique de surcharge d'une cellule. A titre de variante, si les cellules ne peuvent supporter aucune surcharge au-delà de leur tension nominale de pleine charge, le seuil d'activation des éléments chauffants peut être inférieur à deux fois la tension nominale de pleine charge des cellules.

Un avantage du mode de réalisation de la figure 4 est que, pour un nombre donné de cellules élémentaires dans la batterie, il nécessite moins d'éléments chauffants que le mode de réalisation de la figure 3. De plus, dans le mode de réalisation de la figure 4, les éléments chauffants sont activés à des niveaux de tension plus élevés que dans le mode de réalisation de la figure 3, ce qui rend leur réalisation plus aisée. Le mode de réalisation de la figure 4 est particulièrement bien adapté aux batteries utilisant des cellules présentant naturellement un bon niveau d'équilibrage, et dans lesquelles on peut considérer que des cellules voisines se chargent sensiblement à la même vitesse.

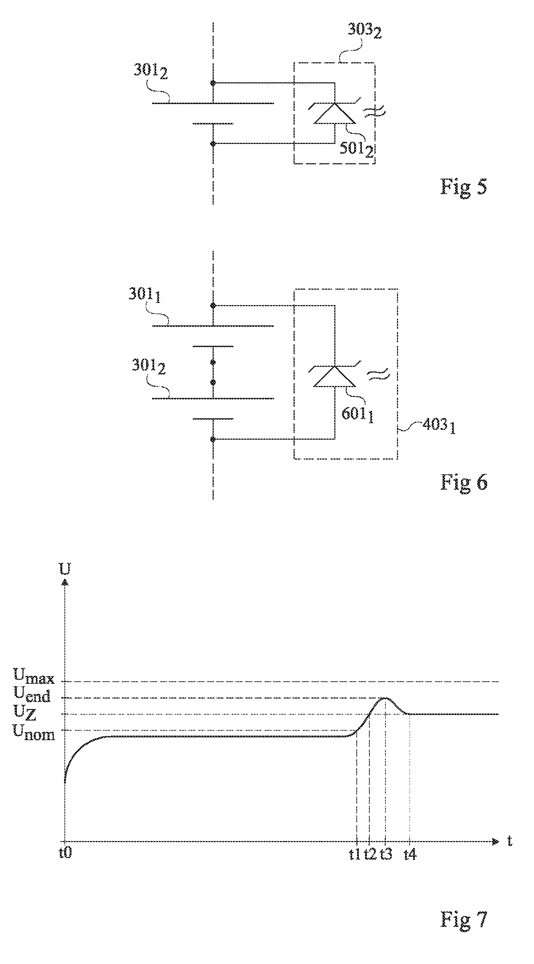

La figure 5 est un schéma électrique partiel représentant de façon plus détaillée un exemple de réalisation d'un élément chauffant compatible avec les modes de réalisation décrits. Sur la figure 5, seule une cellule élémentaire 301₂ et un élément chauffant 303₂ connecté aux bornes de cette cellule ont été représentés. L'élément chauffant 303₂ comprend une diode Zener 501₂ dont l'anode et la cathode sont reliées respectivement à la borne de potentiel bas et à la borne de potentiel haut de la cellule 301₂. La tension de claquage de la diode Zener fixe le seuil d'activation de l'élément chauffant. Lorsque la tension aux bornes de la batterie dépasse la tension de claquage de la diode Zener, la surtension est écrêtée par la diode Zener, et l'énergie électrique excédentaire est dissipée sous forme de chaleur par la diode Zener.

A titre de variante, la diode Zener 501₂ peut être remplacée par un circuit réalisant les mêmes fonctions d'écrêtage et de dissipation d'énergie sous forme de chaleur qu'une diode Zener, mais dont le seuil de déclenchement est programmable. A titre d'exemple, le circuit intégré commercialisé sous la référence TL431 permet de réaliser les fonctions susmentionnées avec un seuil d'activation programmable. Lorsqu'un tel circuit programmable est utilisé, l'élément chauffant 303₂ peut en outre comprendre des résistances de polarisation et/ou une résistance série de protection du circuit programmable.

L'utilisation d'un circuit programmable présente un intérêt tout particulier dans le cas où le seuil d'activation visé de l'élément chauffant est faible, par exemple inférieur à 5 à 10 volts. En effet, les diodes Zener à faible tension de claquage sont relativement difficiles à réaliser et peuvent présenter des fuites non négligeables à l'état bloqué.

La figure 6 représente une variante de réalisation du schéma de la figure 5, dans le cas où un même élément chauffant est associé à plusieurs cellules de la batterie comme dans l'exemple de la figure 4. Sur la figure 6, deux cellules élémentaires en série 301₁ et 301₂, et un élément chauffant 403₁ connecté aux bornes de l'association en série de ces deux cellules, ont été représentés. L'élément chauffant 403₁ comprend une diode Zener 601₁ dont l'anode et la cathode sont reliées respectivement à la borne de potentiel bas de la cellule 301₂ et à la borne de potentiel haut de la cellule 301₁. Comme dans l'exemple de la figure 5, la diode Zener 601₁ peut être remplacée par un circuit réalisant les mêmes fonctions qu'une diode Zener.

Dans le cas où le seuil d'activation visé de l'élément chauffant est élevé, par exemple lorsqu'un même élément chauffant est associé à plusieurs cellules de la batterie comme dans l'exemple des figures 4 et 6, l'utilisation d'une diode Zener pour réaliser l'élément chauffant est particulièrement avantageuse. En effet, le coude de la courbe de réponse d'une diode Zener haute tension est particulièrement franc par rapport à celui d'une diode Zener basse tension, c'est-à-dire que les fuites à l'état bloqué d'une diode Zener haute tension sont négligeables. En outre, pour un seuil d'activation élevé, l'utilisation d'une diode Zener est moins onéreuse que l'utilisation d'un circuit programmable réalisant les mêmes fonctions qu'une diode Zener.

Plus généralement, dans les modes de réalisation décrits, l'élément chauffant peut être tout élément équivalent à une diode Zener, c'est-à-dire un élément à deux bornes de conduction adapté à écrêter la tension entre ses bornes de conduction en dissipant de la chaleur au-delà d'un certain seuil de tension ou tension d'activation, la tension d'activation pouvant être choisie en fonction de la tension nominale de pleine charge du sous-ensemble de cellules auquel l'élément chauffant est destiné à être connecté.

La figure 7 est un chronogramme illustrant un exemple de fonctionnement d'un circuit de gestion de charge du type décrit en relation avec les figures 3 à 6. Plus particulièrement, la figure 7 représente l'évolution, en fonction du temps (t), de la tension (U) aux bornes d'une cellule de la batterie pendant une phase de charge de la batterie. Dans cet exemple, on considère qu'un élément chauffant équivalent à une diode Zener est connecté aux bornes de la cellule. On considère ici le cas d'une cellule ayant une tension nominale de pleine charge Uₙₒₘ, et tolérant, sans détérioration, une surcharge jusqu'à une tension critique Uₘₐₓ supérieure à la tension Uₙₒₘ. L'élément chauffant associé à la cellule a un seuil d'activation U_{z} compris, dans cet exemple, entre la tension Uₙₒₘ et la tension Uₘₐₓ.

A un instant t0 de début d'une phase de charge de la batterie, la cellule est totalement ou partiellement déchargée, et la tension U de la cellule est inférieure à la tension Uₙₒₘ.

A un instant t1 postérieur à l'instant t0, la tension aux bornes de la cellule atteint la tension Uₙₒₘ. Si le courant de charge n'est pas interrompu, la cellule continue à se charger et la tension à ses bornes devient supérieure à la tension Uₙₒₘ.

A un instant t2 postérieur à l'instant t1, la tension aux bornes de la cellule atteint le seuil d'activation U_{z} de l'élément chauffant connecté à la cellule. A ce moment, du courant commence à passer dans l'élément chauffant. Le courant de charge se répartit alors entre la cellule et l'élément chauffant. La cellule continue donc de se charger, et la tension à ses bornes continue à augmenter au-delà du seuil U_{z}, ce qui entraîne une augmentation du courant circulant dans l'élément chauffant. Sous l'effet du courant qui le traverse, l'élément chauffant produit de la chaleur.

A un instant t3 postérieur à l'instant t2, l'élément chauffant atteint un niveau de température entraînant l'arrêt de la charge, c'est-à-dire l'interruption du courant de charge. A cet instant, la tension aux bornes de la cellule est à une valeur U_{end} comprise entre la tension U_{z} et la tension Uₘₐₓ.

Après l'instant t3, la cellule se décharge dans l'élément chauffant et la tension à ses bornes redescend. A un instant t4 postérieur à l'instant t3, la tension aux bornes de la cellule se stabilise à la valeur U_{z}.

Pendant la phase de surcharge entre les instants t2 et t3, les autres cellules de la batterie continuent de se charger. Si, à l'instant t3, toutes les cellules de la batterie ont été amenées au seuil d'activation de leurs éléments chauffants respectifs, alors, après l'instant t3, toutes les cellules se déchargent partiellement dans leurs éléments chauffants respectifs, puis se stabilisent au seuil U_{z}. On réalise ainsi un équilibrage des cellules de la batterie. Si, en revanche, à l'instant t3, certaines cellules de la batterie n'ont pas atteint le seuil U_{z}, alors, après l'instant t3, le courant de décharge des cellules ayant dépassé le niveau U_{z} continue (entre les instants t3 et t4) de charger les cellules les moins chargées. Ceci contribue à l'équilibrage, au moins partiel, des cellules de la batterie.

On notera que, comme cela a été mentionné précédemment, dans le cas de cellules ne supportant pas de surcharge au-delà de leur tension nominale de pleine charge (Uₙₒₘ = Uₘₐₓ), le seuil d'activation U_{z} peut être choisi inférieur à la tension nominale de pleine charge, et le circuit de gestion de charge peut être configuré de façon que la tension U_{end} de la cellule à l'instant t3 soit inférieure à la tension Uₙₒₘ.

Les modes de réalisation décrits ne se limitent pas aux exemples d'éléments chauffants décrits en relation avec les figures 5 et 6. L'homme du métier saura prévoir d'autres éléments chauffants susceptibles de produire de la chaleur lorsque la tension aux bornes de la cellule dépasse un seuil. Par exemple, l'élément chauffant peut comprendre un comparateur de tension dont la sortie est reliée à une résistance adaptée à produire de la chaleur, l'activation de la sortie du comparateur à un état haut entraînant l'alimentation de la résistance et donc la production de chaleur.

Quel que soit le type d'élément chauffant utilisé, ce dernier est de préférence dimensionné pour générer une élévation de température suffisamment importante pour déclencher l'arrêt de la charge avant que la tension de la cellule n'atteigne un niveau critique pouvant conduire à sa destruction.

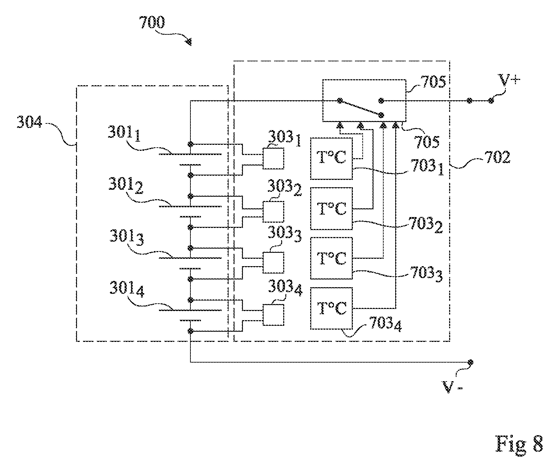

La figure 8 est un schéma électrique illustrant un exemple d'un assemblage 700 comportant la batterie 304 et un autre mode de réalisation d'un circuit de gestion de charge 702. Le circuit de gestion de charge 702 comprend, comme dans l'exemple de la figure 3, en parallèle de chacune des cellules 301ᵢ, un élément chauffant 303ᵢ configuré pour produire de la chaleur lorsque la tension à ses bornes dépasse un seuil d'activation, par exemple choisi en fonction de la tension nominale de pleine charge de la cellule. Le circuit 702 comprend en outre, au voisinage de chacun des éléments chauffants 303ᵢ, un capteur de température 703ᵢ couplé thermiquement à l'élément chauffant 303ᵢ. Le circuit 702 comprend de plus un circuit de contrôle 705 configuré pour contrôler la charge de la batterie en fonction des températures mesurées par les capteurs 703ᵢ.

Un avantage du mode de réalisation de la figure 7 est qu'il permet de mettre en oeuvre un équilibrage relativement précis des cellules de la batterie pendant les phases de charge. A titre d'exemple, le circuit de contrôle 705 peut être configuré pour, dès que l'un des capteurs de température 703ᵢ détecte une élévation de température correspondant à l'activation de l'élément chauffant qui lui est associé, réduire le courant de charge. Le courant de charge est par exemple abaissé de façon que, au niveau de cette cellule, l'intégralité du courant de charge se mette à passer dans l'élément chauffant 303ᵢ, ce qui revient à interrompre la charge de cette cellule. A titre d'exemple, si l'élément chauffant 303ᵢ est réalisé par une diode Zener, le courant de charge est abaissé en dessous du seuil de courant que la diode Zener peut absorber sans que la tension à ses bornes n'augmente. Un courant de charge réduit peut ensuite être maintenu jusqu'à ce que tous les capteurs 703ᵢ détectent une élévation de température, c'est-à-dire jusqu'à ce que toutes les cellules soient chargées et que la batterie soit équilibrée. Le courant de charge peut alors être interrompu par le circuit 705. La batterie est alors équilibrée car toutes ses cellules ont été amenées au même niveau de tension, à savoir la tension d'activation des éléments chauffants du circuit 702.

Des modes de réalisation particuliers de la présente invention ont été décrits. Diverses variantes et modifications apparaîtront à l'homme de l'art.

En particulier, l'invention ne se limite pas aux exemples décrits ci-dessus dans lesquels les cellules élémentaires des batteries sont reliées en série. L'homme du métier saura adapter les modes de réalisation décrits et obtenir le fonctionnement recherché dans les cas où les cellules sont reliées en parallèle ou selon une topologie combinant des associations série et des associations parallèle.

Par ailleurs, l'invention n'est pas limitée aux exemples décrits ci-dessus dans lesquels les batteries comportent quatre cellules élémentaires. L'homme de l'art saura obtenir le fonctionnement recherché quel que soit le nombre de cellules élémentaires.

De plus, l'invention ne se limite pas aux exemples décrits de mode de commande du courant de charge de la batterie en fonction de la température mesurée par le ou les capteurs de température du circuit de gestion de la charge. L'homme du métier saura prévoir d'autres modes de commande du courant de charge permettant d'obtenir les résultats recherchés de protection de la batterie contre des dégradations liées à des surcharges, et/ou d'équilibrage des cellules pendant les phases de charge.

## Revendications

1. Circuit (302 ; 402 ; 702) de gestion de la recharge d'une batterie (304) comportant plusieurs cellules élémentaires (301ᵢ) connectées en série, ce circuit comportant :
une pluralité d'éléments chauffants (303ᵢ ; 403ⱼ), chaque élément chauffant (303ᵢ ; 403ⱼ) étant une diode Zener ou un élément équivalent à une diode Zener et étant adapté à écrêter la tension à ses bornes en dissipant de la chaleur au-delà d'une tension d'activation (U_{z}), les différents éléments chauffants (303ᵢ ; 403ⱼ) étant destinés à être connectés aux bornes de sous-ensembles distincts d'une ou plusieurs cellules (301ᵢ) de la batterie, et la tension d'activation (U_{z}) de chaque élément chauffant (303ᵢ ; 403ⱼ) étant choisie en fonction de la tension nominale de pleine charge (Uₙₒₘ) du sous-ensemble de cellules (301ᵢ) auquel il est destiné à être connecté ;
au moins un capteur de température (103 ; 703ᵢ) adapté à détecter une activation d'un ou plusieurs desdits éléments chauffants (303ᵢ ; 403ⱼ) ; et
un circuit de contrôle (105 ; 705) adapté à commander le courant de charge de la batterie en fonction de détections d'activations d'éléments chauffants (303ᵢ ; 403ⱼ) par le capteur de température (103 ; 703ᵢ).

2. Circuit (302 ; 402 ; 702) selon la revendication 1, dans lequel la tension d'activation (U_{z}) de chaque élément chauffant (303ᵢ ; 403ⱼ) est supérieure ou égale à la tension nominale de pleine charge (Uₙₒₘ) du sous-ensemble de cellules (301ᵢ) auquel il est destiné à être connecté.

3. Circuit (302 ; 402 ; 702) selon la revendication 1, dans lequel la tension d'activation (U_{z}) de chaque élément chauffant (303ᵢ ; 403ⱼ) est inférieure à la tension nominale de pleine charge (Uₙₒₘ) du sous-ensemble de cellules (301ᵢ) auquel il est destiné à être connecté.

4. Circuit (302 ; 402 ; 702) selon l'une quelconque des revendications 1 à 3, dans lequel chaque élément chauffant (303ᵢ ; 403ⱼ) comprend une diode Zener (501₂ ; 601₁).

5. Circuit (302 ; 402 ; 702) selon l'une quelconque des revendications 1 à 3, dans lequel chaque élément chauffant (303ᵢ ; 403ⱼ) comprend un circuit intégré d'écrêtage à tension d'activation programmable.

6. Circuit (302 ; 702) selon l'une quelconque des revendications 1 à 5, dans lequel chaque sous-ensemble comprend une seule cellule (301ᵢ).

7. Circuit (402) selon l'une quelconque des revendications 1 à 5, dans lequel chaque sous-ensemble comprend au moins deux cellules (301ᵢ).

8. Circuit (702) selon l'une quelconque des revendications 1 à 7, comprenant plusieurs capteurs de température (703ᵢ), les différents capteurs de température (703ᵢ) étant couplés thermiquement avec des éléments chauffants (303ᵢ ; 403ⱼ) distincts.

9. Circuit (302 ; 402 ; 702) selon l'une quelconque des revendications 1 à 8, dans lequel le circuit de contrôle (105) est configuré pour modifier le courant de charge lorsque l'activation d'un élément chauffant (303ᵢ ; 403ⱼ) est détectée.

10. Circuit (302 ; 402 ; 702) selon la revendication 9, dans lequel ladite modification consiste à diminuer le courant de charge sans l'interrompre totalement.

11. Circuit (302 ; 402 ; 702) selon la revendication 9, dans lequel ladite modification consiste à interrompre le courant de charge.

12. Circuit (702) selon la revendication 8, dans lequel le circuit de contrôle (105) est configuré pour interrompre le courant de charge lorsque chacun desdits capteurs de température (703ᵢ) détecte une activation d'élément chauffant.

13. Assemblage (300 ; 400 ; 700) comportant une batterie (304) de cellules élémentaires (301ᵢ) connectées en série et un circuit (302 ; 402 ; 702) de gestion de recharge selon l'une quelconque des revendications 1 à 12.

## Patentansprüche

1. Eine Schaltung (302; 402; 702) zum Verwalten der Wiederaufladung einer Batterie bzw. eines Akkus (304), der mehrere Elementarzellen (301ᵢ) aufweist, die in Reihe verbunden sind, wobei die Schaltung Folgendes aufweist: eine Vielzahl von Heizelementen (303ᵢ; 403ⱼ); wobei jedes Heizelement (303ᵢ; 403ⱼ) eine Zener-Diode oder ein Element äquivalent zu einer Zener-Diode ist und in der Lage ist, die Spannung darüber hinweg festzuhalten durch Abführen der Wärme über eine Aktivierungsspannung (Uz) hinaus, wobei die unterschiedlichen Heizelemente (303ᵢ; 403ⱼ) über verschiedene Unteranordnungen einer oder einer Vielzahl von Zellen (301ᵢ) des Akkus verbunden werden sollen, und wobei die Aktivierungsspannung (Uz) jedes Heizelements (303ᵢ; 403ⱼ) gemäß der nominalen Vollladungsspannung (Uₙₒₘ) der Unteranordnung von Zellen (301ᵢ) ausgewählt wird, mit der sie verbunden werden soll;
wenigstens einen Temperatursensor (103, 703ᵢ), der in der Lage ist, eine Aktivierung von einem oder einer Vielzahl von den Heizelementen (303ᵢ; 403ⱼ) zu detektieren; und
eine Steuerschaltung (105; 705), die in der Lage ist, den Ladestrom der Batterie gemäß Detektionen der Aktivierungen der Heizelemente (303ᵢ; 403ⱼ) durch den Temperatursensor (103; 703ᵢ) zu steuern.

2. Schaltung (302; 402; 702) nach Anspruch 1, wobei die Aktivierungsspannung (Uz) jedes Heizelements (303ᵢ; 403ⱼ) größer als oder gleich der nominalen Vollladungsspannung (Uₙₒₘ) der Unteranordnung von Zellen (301ᵢ) ist, mit der sie verbunden werden soll.

3. Schaltung (302; 402; 702) nach Anspruch 1, wobei die Aktivierungsspannung (Uz) jedes Heizelements (303ᵢ; 403ⱼ) kleiner ist als die nominale Vollladungsspannung (Uₙₒₘ) der Unteranordnung von Zellen (301ᵢ), mit der sie verbunden werden soll.

4. Schaltung (302; 402; 702) nach einem der Ansprüche 1 bis 3, wobei jedes Heizelement (303ᵢ; 403ⱼ) eine Zener-Diode (501₂; 601₁) aufweist.

5. Schaltung (302; 402; 702) nach einem der Ansprüche 1 bis 3, wobei jedes Heizelement (303ᵢ; 403ⱼ) eine integrierte Klemmschaltung mit einer programmierbaren Aktivierungsspannung aufweist.

6. Schaltung (302; 702) nach einem der Ansprüche 1 bis 5, wobei jede Unteranordnung eine einzelne Zelle (301ᵢ) aufweist.

7. Schaltung (402) nach einem der Ansprüche 1 bis 5, wobei jede Unteranordnung wenigstens zwei Zellen (301ᵢ) aufweist.

8. Schaltung (702) nach einem der Ansprüche 1 bis 7, die eine Vielzahl von Temperatursensoren (703ᵢ) aufweist, wobei die unterschiedlichen Temperatursensoren (703ᵢ) thermisch mit unterschiedlichen Heizelementen (303ᵢ; 403ⱼ) gekoppelt sind.

9. Schaltung (302; 402; 702) nach einem der Ansprüche 1 bis 8, wobei die Steuerschaltung (105) konfiguriert ist zum Modifizieren des Ladestroms, wenn die Aktivierung eines Heizelements (303ᵢ; 403ⱼ) detektiert wird.

10. Schaltung (302; 402; 702) nach Anspruch 9, wobei die Modifikation Verringern des Ladestroms ohne vollständiges Unterbrechen davon aufweist.

11. Schaltung (302; 402; 702) nach Anspruch 9, wobei die Modifikation Unterbrechen des Ladestroms aufweist.

12. Schaltung (702) nach Anspruch 8, wobei die Steuerschaltung (105) konfiguriert ist zum Unterbrechen des Ladestroms, wenn jeder der Temperatursensoren (703ᵢ) eine Aktivierung eines Heizelements detektiert.

13. Eine Anordnung (300; 400; 700), die eine Batterie bzw. einen Akku (304) aus Elementarzellen (301ᵢ), die in Reihe verbunden sind, und die Ladeverwaltungsschaltung (302; 402; 702) nach einem der Ansprüche 1 bis 12 aufweist.

## Claims

1. A circuit (302; 402; 702) for managing the recharge of a battery (304) comprising several elementary cells (301i) connected in series, the circuit comprising:
a plurality of heating elements (303ᵢ; 403ⱼ), each heating element (303ᵢ; 403ⱼ) being a Zener diode or an element equivalent to a Zener diode and being capable of clamping the voltage thereacross by dissipating the heat beyond an activation voltage (U_{z}), the different heating elements (303ᵢ; 403ⱼ) being intended to be connected across different sub-assemblies of one or a plurality of cells (301ᵢ) of the battery, and the activation voltage (U_{z}) of each heating element (303ᵢ; 403ⱼ) being selected according to the nominal full charge voltage (Uₙₒₘ) of the sub-assembly of cells (301i) to which it is intended to be connected;
at least one temperature sensor (103; 703ᵢ) capable of detecting an activation of one or a plurality of said heating elements (303ᵢ; 403ⱼ); and
a control circuit (105; 705) capable of controlling the charge current of the battery according to detections of activations of heating elements (303ᵢ; 403ⱼ) by the temperature sensor (103; 703ᵢ).

2. The circuit (302; 402; 702) of claim 1, wherein the activation voltage (U_{z}) of each heating element (303ᵢ; 403ⱼ) is greater than or equal to the nominal full charge voltage (Uₙₒₘ) of the sub-assembly of cells (301ᵢ) to which it is intended to be connected.

3. The circuit (302; 402; 702) of claim 1, wherein the activation voltage (U_{z}) of each heating element (303ᵢ; 403ⱼ) is smaller than the nominal full charge voltage (Uₙₒₘ) of the sub-assembly of cells (301ᵢ) to which it is intended to be connected.

4. The circuit (302; 402; 702) of any of claims 1 to 3, wherein each heating element (303ᵢ; 403ⱼ) comprises a Zener diode (501₂; 601₁).

5. The circuit (302; 402; 702) of any of claims 1 to 3, wherein each heating element (303ᵢ; 403ⱼ) comprises an integrated clamping circuit having a programmable activation voltage.

6. The circuit (302; 702) of any of claims 1 to 5, wherein each sub-assembly comprises a single cell (301ᵢ).

7. The circuit (402) of any of claims 1 to 5, wherein each sub-assembly comprises at least two cells (301ᵢ).

8. The circuit (702) of any of claims 1 to 7, comprising a plurality of temperature sensors (703ᵢ), the different temperature sensors (703ᵢ) being thermally coupled with different heating elements (303ᵢ; 403ⱼ).

9. The circuit (302; 402; 702) of any of claims 1 to 8, wherein the control circuit (105) is configured to modify the charge current when the activation of a heating element (303ᵢ; 403ⱼ) is detected.

10. The circuit (302; 402; 702) of claim 9, wherein said modification comprises decreasing the charge current without totally interrupting it.

11. The circuit (302; 402; 702) of claim 9, wherein said modification comprises interrupting the charge current.

12. The circuit (702) of claim 8, wherein the control circuit (105) is configured to interrupt the charge current when each of said temperature sensors (703ᵢ) detects an activation of a heating element.

13. An assembly (300; 400; 700) comprising a battery (304) of elementary cells (301ᵢ) connected in series and the charge management circuit (302; 402; 702) of any of claims 1 to 12.
